# EUROPÄISCHE PATENTSCHRIFT

(11) **EP 0 597 394 B1**
(45) Veröffentlichungstag und Bekanntmachung des Hinweises auf die Patenterteilung: **12.02.1997**
(21) Anmeldenummer: 93117943.6
(22) Anmeldetag: 05.11.1993
(51) Int. Cl.: C08F 8/00, C08F 8/30, C09D 201/08

(54) **Bindemittelzusammensetzung, diese enthaltende Überzugsmittel, deren Herstellung und Verwendung**
Binder composition, coating containing the same, manufacture and use thereof
Composition de liant, revêtement contenant cette composition sa préparation et son application

(30) Priorität: 07.11.1992 DE 4237659
(43) Veröffentlichungstag der Anmeldung: 18.05.1994
(73) Patentinhaber: Herberts Gesellschaft mit beschränkter Haftung, 42285 Wuppertal (DE)
(72) Erfinder: Bederke, Klaus, Dr., D-45549 Sprockhövel (DE); Flosbach, Carmen, Dr., D-42115 Wuppertal (DE); Frigge, Eva, Dr., D-44789 Bochum (DE); Schubert, Walter, Dr., D-42349 Wuppertal (DE)
(74) Vertreter: Hrabal, Ulrich, Dr.

(56) Entgegenhaltungen:
- EP-A- 0 319 864
- EP-A- 0 358 358
- EP-A- 0 458 479
- FR-A- 1 363 527
- FR-A- 2 235 164
- CHEMICAL ABSTRACTS, vol. 80, no. 6, 11. Februar 1974, Columbus, Ohio, US; abstract no. 28612b, MINAMI, TOMOYUKI 'THERMOSETTING COATING COMPOSITION CONTAINING CARBOXYLIC ACID/EPOXIDE/VINYL COPOLYMER AND AMINOPLAST RESIN, FOR METALS AND WOOD' Seite 95 ;Spalte 1 ;

## Beschreibung

Die Erfindung betrifft Bindemittelzusammensetzungen, die zur Herstellung von Überzugsmitteln geeignet sind, die bei erhöhter Temperatur eingebrannt werden und insbesondere zur Herstellung von Mehrschichtlackierungen, beispielsweise auf dem Kraftfahrzeugsektor, geeignet sind.

In der DE-A-30 22 996 werden Einbrennlacke auf der Basis carboxylgruppenhaltiger Polymerer, wie z.B. von Acrylaten auf der Basis von Acrylsäure und Methacrylsäure und glycidylgruppenhaltigen Acrylaten beschrieben.

In der WO 84/00771 wird ein Mehrkomponentensystem beschrieben, bei dem vier Bindemitteltypen miteinander vermischt und dann appliziert werden. Bei den Komponenten handelt es sich um hydroxylgruppenhaltiges Acrylat, Säureanhydrid, wobei mindestens 50 % Alkylhexahydrophthalsäureanhydride sind, Epoxidharz und Melaminharz. Die Systeme weisen einen hohen Festkörpergehalt auf.

In der DE-A-23 33 384 wird ein Bindemittel auf der Basis acrylierter Polyester beschrieben, die durch Polymerisation eines hydroxylgruppenhaltigen Acrylates in einem hydroxylgruppenhaltigen Polyester oder Alkydharz erhalten werden. Die Vernetzung kann mit Melaminharzen und gleichzeitig Epoxidharzen durchgeführt werden.

In der DE-A-40 27 259 wird ein Bindemittelsystem beschrieben, bei dem epoxid- und acryloylfunktionelle Bindemittel mit Polyaminen gehärtet werden.

Die bekannten Überzugsmittel führen teilweise zu Filmen mit hoher Härte und guter Wetterbeständigkeit. Jedoch genügen sie den ständig steigenden Anforderungen an hohe Säurebeständigkeit und Lösemittelresistenz nicht.

Aufgabe der Erfindung ist daher die Bereitstellung eines Bindemittelsystems, das zu Überzugsmitteln verarbeitet werden kann, die bei erhöhter Temperatur eingebrannt werden können und zu hochsäurebeständigen und lösemittelresistenten Überzügen führen.

Es hat sich gezeigt, daß diese Aufgabe gelöst werden kann durch eine Bindemittelzusammensetzung, die enthält:
A) 25 bis 75 Gew.-% eines oder mehrerer carboxylgruppenhaltiger Harze, die alpha, beta-ungesättigte Gruppen enthalten können, mit einem Zahlenmittel des Molekulargewichts (Mn) von 500 bis 10000 g/Mol und einer Säurezahl von 15 bis 200 mg KOH/g,
B) 25 bis 75 Gew.-% eines oder mehrerer Polyether, Polyester, Polyether/Polyester und/oder (Meth)acrylcopolymerer mit mindestens einer alpha,beta-ungesättigten Gruppe und mindestens einer Epoxidgruppe im Molekül, wobei die alpha,beta-ungesättigten Gruppen und Epoxidgruppen im Zahlenverhältnis 20 : 80 bis 80 : 20 vorliegen, mit einem Zahlenmittel des Molgewichts (Mn) von bis zu 10000 g/Mol,
C) 0 bis 60 Gew. -% eines oder mehrerer Polyole mit mindestens zwei Hydroxyfunktionen im Molekül,
D₁) 0 bis 20 Gew.-% eines oder mehrerer Melaminharze,
D₂) 0 - 40 Gew.-% eines oder mehrerer verkappter Polyisocyanate,
wobei sich die Summe der Gew.-% der Komponente A), B), C), D₁) und D₂) auf 100 Gew.-% addiert, sowie
E) 0 bis 10 Gew.-% eines oder mehrerer Katalysatoren zur Katalyse der Reaktion von Carboxyl- und Epoxidgruppen, bezogen auf die Summe der Gewichte der Komponenten A) bis D₂),
F) 0,1 bis 10 Gew.-% eines oder mehrerer thermisch und/oder photochemisch aktivierbarer Initiatoren, bezogen auf das Gesamtgewicht der Komponenten A) und B).

Gemäß einer bevorzugten Ausführungsform der Erfindung handelt es sich bei den Harzen der Komponente A) um ein oder mehrere carboxylgruppenhaltige (Meth)acrylcopolymere, die alpha,beta-ungesättigte Gruppen aufweisen können. Derartige (Meth)acrylcopolymere weisen bevorzugt ein Zahlenmittel des Molgewichts (Mn) von 500 bis 10000 g/Mol und eine Säurezahl von 15 bis 200 mg KOH/g, bevorzugt von 30 bis 140 mg KOH/g und besonders bevorzugt von 60 bis 120 mg KOH/g auf.

Gemäß einer weiteren bevorzugten Ausführungsform der Erfindung sind die Harze der Komponente A) ein oder mehrere carboxylgruppenhaltige Polyester, die gegebenenfalls alpha,beta-ungesättigte Gruppen aufweisen können. Diese Polyester weisen bevorzugt ein errechnetes Molgewicht von 500 bis 2000 g/Mol auf. Die Polyester können im Gemisch mit dem vorstehend genannten (Meth)acrylcopolymeren in der Komponente A) vorliegen.

Bei der Herstellung der carboxylgruppenhaltigen Harze der Komponente A) können die Carboxylgruppen direkt durch Verwendung carboxylgruppenhaltiger Bausteine beim Aufbau der Harze, beispielsweise beim Aufbau von Polymeren, wie (Meth)acrylcopolymeren, eingeführt werden.

Beispiele für geeignete carboxylgruppenhaltige Monomere sind ungesättigte Carbonsäuren, wie z.B. Acryl-, Methacryl-, Itacon-, Croton-, Isocroton-, Aconit-, Malein- und Fumarsäure, Halbester der Malein- und Fumarsäure sowie β-Carboxyethylacrylat und Addukte von Hydroxyalkylestern der Acrylsäure und/oder Methacrylsäure mit Carbonsäureanhydriden, wie z.B. der Phthalsäure-mono-2-methacryloyloxyethylester.

In der vorliegenden Beschreibung und den Patentansprüchen wird der Ausdruck (Meth)acryl verwendet. Dieser bedeutet Acryl und/oder Methacryl.

Bei der Herstellung der carboxylgruppenhaltigen Harze ist es aber auch möglich, zunächst ein hydroxy- und gegebenenfalls carboxylgruppenhaltiges Polymer mit einer OH-Zahl von 15 bis 200 mg KOH/g aufzubauen und die Carboxylgruppen ganz oder teilweise in einer zweiten Stufe durch Umsetzen der Hydroxyl- und gegebenenfalls carboxylgruppenhaltigen Polymeren mit Carbonsäureanhydriden einzuführen.

Für die Addition an die hydroxylgruppenhaltigen Polymeren geeignete Carbonsäureanhydride sind die Anhydride von aliphatischen, cycloaliphatischen und aromatischen gesättigten und/oder ungesättigten Di- und Polycarbonsäuren, wie beispielsweise die Anhydride der Phthalsäure, Tetrahydrophthalsäure, Hexahydrophthalsäure, Bernsteinsäure, Maleinsäure, Itaconsäure, Glutarsäure, Trimellithsäure und Pyrromellithsäure sowie deren halogenierte und alkylierte Derivate.

Bevorzugt eingesetzt werden Anhydride der Phthalsäure, Tetrahydro- und Hexahydropthalsäure sowie 5-Methylhexahydrophthalsäureanhydrid.

Beispiele für geeignete Hydroxyalkylester alpha,beta-ungesättigter Carbonsäuren mit primären Hydroxylgruppen zur Herstellung hydroxyfunktioneller Poly(meth)acrylate sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Als Beispiele für verwendbare Hydroxyalkylester mit einer sekundären Hydroxylgruppe seien 2-Hydroxypropylacrylat, 2-Hydroxybutylacrylat, 3-Hydroxybutylacrylat und die entsprechenden Methacrylate genannt.

Vorteilhafterweise kann die hydroxyfunktionalisierte Komponente zumindest teilweise ein Umsetzungsprodukt aus einem Mol Hydroxyethylacrylat und/oder Hydroxyethylmethacrylat und durchschnittlich zwei Mol epsilon-Caprolacton sein.

Als hydroxyfunktionalisierte Komponente kann zumindest teilweise auch ein Umsetzungsprodukt aus Acrylsäure und/oder Methacrylsäure mit dem Glycidylether einer Carbonsäure mit einem tertiären alpha-Kohlenstoffatom eingesetzt werden. Glycidylester stark verzweigter Monocarbonsäuren sind unter dem Handelsnamen "Cardura^{R}" erhältlich. Die Umsetzung von Acrylsäure oder Methacrylsäure mit dem Glycidylester einer Carbonsäure mit einem tertiären alpha-Kohlenstoffatom kann vor, während oder nach der Polymerisationsreaktion erfolgen.

Bei der Herstellung der (Meth)acrylcopolymeren können neben den vorstehend genannten Monomeren auch weitere ethylenisch ungesättigte Monomere verwendet werden. Die Auswahl der weiteren ethylenisch ungesättigten Monomeren ist nicht kritisch. Es muß nur darauf geachtet werden, daß der Einbau der Monomeren nicht zu unerwünschten Eigenschaften des Copolymerisats führt.
Als weitere ethylenisch ungesättigte Monomere kommen beispielsweise in Frage Alkylester der Acryl- und Methacrylsäure, wie z.B. Methyl(meth)acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat und Octadecenyl(meth)acrylat. Ebenfalls möglich ist die Verwendung von silanmodifizierten Monomeren, wie z.B. gamma-Methacryloxypropyltrimethoxy-silan oder gamma-Methacryloxypropyl-tris (2-methoxyethoxy) -silan.

Statt der vorstehend genannten Alkylester der Acryl- und Methacrylsäure oder zusammen mit diesen Alkylestern können zur Herstellung von (Meth)acrylcopolymerisaten weitere ethylenisch ungesättigte Monomere eingesetzt werden, wobei sich die Auswahl dieser Monomeren weitgehend nach den gewünschten Eigenschaften der Überzugsmittel in Bezug auf Härte, Elastizität, Verträglichkeit und Polarität richtet.
Beispiele für weitere geeignete ethylenisch ungesättigte Monomere sind die Alkylester der Malein-, Fumar-, Tetrahydrophthal-, Croton-, Isocroton-, Vinylessig- und Itaconsäure, wie z.B. entsprechenden Methyl-, Ethyl-, Propyl-, Butyl-, Isopropyl-, Isobutyl-, Pentyl-, Amyl-, Isoamyl-, Hexyl-, Cyclohexyl-, 2-Ethylhexyl-, Octyl-, 3,5,5-Trimethylhexyl-, Decyl-, Dodecyl-, Hexadecyl-, Octadecyl- und Octadecenylester.

Weiterhin können auch kleine Anteile Monomere mit mindestens zwei polymerisierbaren, olefinisch ungesättigten Doppelbindungen eingesetzt werden. Bevorzugt liegt der Anteil dieser Monomere unter 5 Gew.-%, bezogen auf das Gesamtgewicht der Monomeren.

Beispiele für derartige Verbindungen sind Hexandioldiacrylat, Hexandioldimethacrylat, Ethylenglykoldiacrylat, Ethylenglykoldimethacrylat, Butandioldiacrylat, Butandioldimethacrylat, Hexamethylenbismethacrylamid. Trimethylolpropantriacrylat, Trimethylolpropantrimethacrylat und ähnliche Verbindungen.

Als weitere Monomerkomponenten können eine oder mehrere monovinylaromatische Verbindungen verwendet werden. Vorzugsweise enthalten sie 8 bis 9 Kohlenstoffatome je Molekül. Geeignete Beispiele hierfür sind Styrol, Vinyltoluole, alpha-Methylstyrol, Chlorstyrole, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt.

Wie vorstehend erwähnt, kann es sich bei den carboxylgruppenhaltigen Harzen der Komponente A) um carboxylgruppenhaltige Copolymerisate und/oder carboxylgruppenhaltige Polyester handeln. Carboxylgruppenhaltige Polyester können nach üblichen Methoden (vgl. z.B. B. Vollmert, Grundriß der makromolekularen Chemie, E. Vollmert-Verlag Karlsruhe 1982, Band II, Seite 5 ff.) aufgebaut werden aus aliphatischen und/oder cycloaliphatischen Di-, Tri- oder höherwertigen Alkoholen, gegebenenfalls zusammen mit einwertigen Alkoholen und aus aromatischen, aliphatischen und/oder cycloaliphatischen Carbonsäuren sowie höherwertigen Polycarbonsäuren. Beispiele für geeignete Alkohole sind Ethylenglykol, 1,2-Propandiol, 1,3-Propandiol, 2,2-Dimethyl-1,3-propandiol, 1,2-Butandiol, 1,3-Butandiol, 1,4-Butandiol, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, Glycerin, Trimethylethan, Trimethylolpropan, Pentaerythrit, Veretherungsprodukte von Diolen und Polyolen, z.B. Di- und Triethylenglykol, Polyethylenglykol, Neopentylglykolester von Hydroxypivalinsäure.

Beispiele für geeignete Carbonsäuren sind Adipin-, Azelain-, Tetrahydrophthal-, Hexahydrophthal-, Endomethyltetrahydrophthalsäure, 1,3- und 1,4-Cyclohexandicarbonsäure, Isophthalsäure, o-Phthalsäure, Terephthalsäure und/oder deren Anhydride, sowie deren veresterungefähige Derivate.

Die errechneten Molgewichte der Polyester liegen zwischen 500 und 2000 g/mol.

Die aufgeführten carboxyfunktionellen Harze können in einem weiteren Reaktionsschritt mit einem Lacton kettenverlängert werden. Diese cyclischen Ester lagern sich an Carboxylgruppen an, wobei der Ring geöffnet wird und eine neue endständige Carboxylgruppe entsteht. Besonders bevorzugtes Lacton ist epsilon-Caprolacton.

Beispiele für andere Lactone sind gamma-Butyrolacton und Lactone, wie beta-Propiolacton, delta-Valerolacton, delta-Butyrolacton, zeta-Enantholacton eta-Caprylolacton. Derartige Lactone können substituiert sein; Beispiele hierfür sind 6-Methyl-epsilon-caprolacton, 3-Methyl-epsilon-caprolacton, 5-Methyl-epsilon-caprolacton, 5-Phenol-epsilon-caprolacton, 4-Methyl-delta-valerolacton, 3,5-Dimethyl-epsilon-carprolacton, und Mischungen davon.

Die Anlagerung erfolgt beispielsweise im Anschluß an die Harzsynthese, beispielsweise bei erhöhter Temperatur von beispielsweise 100°C. Beispielsweise kann bis zu 10 Stunden unter beispielsweise Rühren umgesetzt werden.

Das lactonmodifizierte Harz kann anschließend durch die Anlagerung einer alpha,beta-ungesättigten Epoxidverbindung gegebenenfalls teilweise acryliert werden. Beispiele für alpha,beta-ungesättigte Epoxidverbindungen sind Glycidylacrylat und Glycidylmethacrylat. Die Herstellung erfolgt z.B., indem das COOH-funktionalisierte Harz unter Rühren auf z.B. 120°C erhitzt wird und die ungesättigte Glycidylverbindung in z.B. 10 bis 30 Minuten zugetropft wird. Es wird gerührt, bis die Umsetzung vollständig abgelaufen ist.

Die erfindungsgemäße Bindemittelzusammensetzung enthält als Komponente B) einen oder mehrere Polyether, Polyester, Polyether/Polyester und/oder (Meth)acrylcopolymere mit mindestens einer alpha,beta-ungesättigten Gruppe und mindestens einer Epoxidgruppe im Molekül. Diese Komponente ist gemäß einer bevorzugten Ausführungsform der Erfindung eine glycidyl- und (meth)acryloylfunktionellen Komponente, die gemäß einer bevorzugten Ausführungsform eine oder mehrere glycidyl- und (meth)acryloylfunktionelle Verbindungen mit mindestens je einer funktionellen Gruppe der Formel 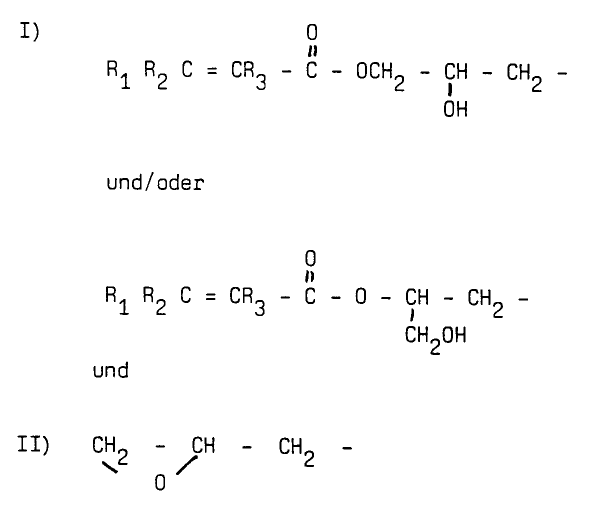 enthält,
worin R₁, R₂ und R₃ unabhängig voneinander ein Wasserstoffatom oder ein gerader oder verzweigter Alkylrest mit 1 bis 10 Kohlenstoffatomen sein können;
wobei I und II an einen Rest eines oder mehrerer
a) Polyole aus der Gruppe von geraden oder verzweigten (cyclo)aliphatischen-und/oder aromatischen Di- oder Polyolen mit 2 bis 12 Kohlenstoffatomen mit einem Zahlenmittel des Molekulargewichts (Mn) von bis zu 2000,
b) Polyester-Polyole oder Polyether-Polyole mit einem Zahlenmittel des Molekulargewichts (Mn) von 500 bis 2000 und/oder
c) Poly(meth)acrylsäureester, gegebenenfalls copolymerisiert mit alpha,beta-ungesättigten Monomeren, mit einem Zahlenmittel des Molekulargewichts Mn von 1000 bis 10000 gebunden sind.

Das Zahlenverhältnis Epoxid- zu alpha,beta-ungesättigten Gruppen im Bindemittel liegt zwischen 20:80 und 80:20, bevorzugt zwischen 30:70 und 70:30. Das Zahlenverhältnis bezieht sich auf das Verhältnis der Gesamtzahl von Epoxidgruppen zu der Gesamtanzahl von alpha,beta-ungesättigten Gruppen in einem Molekül.

Die Bindemittelkomponente der erfindungsgemäßen Bindemittel, die mindestens je eine Glycidyl- und alpha,beta-ungesättigten Gruppe enthält, kann beispielsweise hergestellt werden durch Umsetzung von Di- oder Polyepoxiden mit alpha, beta-ungesättigten Carbonsäuren unter Öffnung des Oxiranringes. Gebräuchliche Di- oder Polyepoxide sind z.B. Polyglycidylether auf Basis von Diethylenglykol, Dipropylenglykol, Polypropylenglykol mit einem Zahlenmittel des Molgewichtes Mn bis 2000, Triglycidylether von Glycerin und/oder Di- oder Polyphenolen wie Bisphenol A.

Weitere Beispiele für Di- oder Polyepoxide sind solche auf der Basis von Di- oder Polyglycidylestern. Beispiele hierfür sind Umsetzungsprodukte aus 1-Hydroxy-2,3-epoxypropan mit Phthal- oder Terephthalsäure zu Phthal- oder Terephthalsäure-bis-(2,3-epoxypropylester) oder einem Diglycidylether von Bisphenol A mit Trimellithsäureanhydrid zu Polyestern mit einem Zahlenmittel des Molekulargewichtes Mn von 500 bis 2000.

Ebenfalls verwendbare Beispiele sind Glycidyl-funktionalisierte (Meth)acrylpolymere. Beispiele hierfür sind Copolymere von Glycidyl(meth)acrylat, 1,2-Epoxybutylacrylat oder 2,3-Epoxycyclopropylacrylat. Als Comonomere können Ester der (Meth)acrylsäure wie z.B. Methyl-, Ethyl-, Butyl-, Isobutyl-, Ethylhexyl-, Cyclohexyl- und/oder Lauryl-(meth)acrylat gewählt werden, hydroxyfunktionalisierte Ester der (Meth)acrylsäure wie z.B. Hydroxyethyl- und/oder Hydroxypropyl-Ester, weiterhin auch Styrol, Vinyltoluol und/oder α-Methylstyrol. Das Zahlenmittel des Molgewichtes kann zwischen 1000-10000 liegen, bevorzugt bei 2000-5000. Weitere copolymerisierbare Glycidylmonomere sind z.B. (Meth)allylglycidylether oder 3,4-Epoxy-1-vinylcyclohexan. Die Herstellung der Copolymere erfolgt über radikalische Lösungspolymerisation, sie ist dem Fachmann bekannt und bedarf keiner weiteren Erläuterung.

Die Di- oder Polyepoxide können zur Herstellung der Filmbildnerkomponente der Bindemittel beispielsweise mit ein- oder mehrfach ungesättigten Monocarbonsäuren, z.B. mit 2 bis 10, vorzugsweise 3 bis 6 Kohlenstoffatomen, wie Zimtsäure, Crotonsäure, Citraconsäure, Sorbinsäure, Maleinsäure, Fumarsäure, vorzugsweise Acryl und/oder Methacrylsäure umgesetzt werden.

Zur Synthese der glycidyl- und alpha,beta-ungesättigt funktionalisierten Verbindungen können die Reaktionskomponenten in einem Lösemittel erwärmt werden Als Lösemittel sind aprotische organische Lösemittel geeignet. Es ist günstig, die Herstellung unter Inertgas durchzuführen. Die ungesättigte Monocarbonsäure wird in einer derartigen Menge eingesetzt, daß das gewünschte Zahlenverhältnis von Epoxid- und alpha,beta-ungesättigten Gruppen erzielt wird.

Die Reaktion wird so lange fortgesetzt, bis die eingesetzte ungesättigte Monocarbonsäure verbraucht ist. Im folgenden wird ein Beispiel für eine Synthese der epoxid- und alpha,beta-ungesättigt funktionalisierten Verbindungen angegeben. Die epoxidfunktionalisierte Verbindung wird unter Inertgas in einem aprotischen organischen Lösemittel gelöst und z.B. auf 80°C erhitzt. Die ungesättigte Monocarbonsäure, die gegebenenfalls in einem organischen aprotischen Lösemittel gelöst sein kann, wird dann in einem Zeitraum von z.B. 1 Stunde zudosiert. Die Reaktionslösung wird anschließend bei 80°C gerührt, bis die Säurezahl der Lösung kleiner 1 mg KOH/g Festharz ist.

Es ist auch möglich, die Bindemittelkomponenten A) und B) in präkondensierter Form zu verwenden. Hierzu können die Bindemittelkomponenten A) und B) in einem weiteren Reaktionsschritt teilweise präkondensiert werden. Dies kann z.B. dadurch geschehen, daß man die Komponenten A) und B) gemeinsam erhitzt (beispielsweise unter Rühren, beispielsweise auf Temperaturen von 80 bis 120°C). Den gewünschten Präkondensationsgrad kann man durch die erzielte Säurezahl feststellen; beispielsweise wird solange umgesetzt, bis die Säurezahl der Mischung um 2 bis 5 mg KOH/g Festharz gefallen ist; selbstverständlich ist es auch möglich, die Säurezahl weiter zu verringern; es sollte dabei darauf geachtet werden, daß die Viskosität der Mischung nicht bis zum Gelieren ansteigt. Eine derartige Präkondensation hat den Vorteil, daß die Lagerstabilität der Bindemittelzusammensetzung weiter erhöht wird.

Die erfindungsgemäße Bindemittelzusammensetzung kann gegebenenfalls bis zu 30 Gew.-% eines oder mehrerer Polyole mit mindestens zwei Hydroxyfunktionen im Molekül als Komponente C) enthalten. Diese Polyole können beispielsweise ausgewählt werden aus
a) Polyolen aus der Gruppe von geraden oder verzweigten Alkan-di- und Polyolen mit 2 bis 12 Kohlenstoffatomen, oder
b) hydroxylgruppenhaltigen Poly(meth)acrylaten oder Poly(meth)acrylamiden auf der Basis von (Meth)acrylsäurehydroxyalkylestern mit 2 bis 12 Kohlenstoffatomen im Alkylteil oder (Meth)acrylsäurehydroxyalkylamiden mit 2 bis 12 Kohlenstoffatomen im Alkylteil, gegebenenfalls copolymerisiert mit alpha,beta-ungesättigten Monomeren, mit einem Zahlenmittel des Molekulargewichts Mn von 1000 bis 10000 g/mol, oder
c) hydroxylgruppenhaltigen Poly(meth)acrylaten auf der Basis von (Meth)acrylsäurehydroxyalkylestern mit 2 bis 12 Kohlenstoffatomen im Alkylteil und gegebenenfalls copolymerisierbaren alpha,beta-ungesättigten Monomeren, die mit cyclischen Estern von Hydroxycarbonsäuren mit 4 bis 6 Kohlenstoffatomen modifiziert sind, mit einem Zahlenmittel des Molekulargewichts Mn von 1000 bis 10000 g/mol, oder
d) Polyester-Polyolen oder Polyether-Polyolen jeweils mit einem Zahlenmittel des Molekulargewichts Mn von 500 bis 2000 g/mol.

Beispiele für geeignete Alkan-di- und -polyole der Gruppe a) sind solche mit geraden und verzweigten Ketten mit 2 bis 12 Kohlenstoffatomen. Sie enthalten mindestens zwei Hydroxyfunktionen, vorzugsweise jedoch mindestens drei. Beispiele hierfür sind Propandiol, Butandiol, Hexandiol, Glycerin, Trimethylolpropan und Pentaerythrit.

Beispiele für hydroxylgruppenhaltige Poly(meth)acrylate b) auf der Basis von (Meth)acrylsäurehydroxylalkylester sind Ester der Acrylsäure oder Methacrylsäure mit Alkoholen mit mindestens zwei Hydroxylgruppen, wie 1,4-Butandiol-mono(meth)acrylat 1,6-Hexandiol-mono(meth)acrylat oder 1,2,3-Propantriol-mono(meth)acrylat. Beispiele für hydroxylgruppenhaltige Poly(meth)acrylamide b) auf der Basis von (Meth)acrylsäurehydroxyalkylamiden sind Amide der Acrylsäure oder Methacrylsäure mit Hydroxyalkylaminen oder Di(hydroxyalkyl)aminen mit jeweils 2 bis 12 Kohlenstoffatomen im Alkylteil, die eine oder mehrere Hydroxylgruppen aufweisen können, wie Acrylsäurehydroxyethylamid.

Die hydroxylgruppenhaltigen Poly(meth)acrylate der Komponente b) können Homo- oder Copolymerisate sein. Sie weisen beispielsweise Zahlenmittel des Molekulargewichts von 1000 bis 10000, bevorzugt von 3000 bis 6000 g/mol auf. Copolymerisierbare Monomere zur Herstellung der Copolymerisate sind alpha,beta-ungesättigte Monomere, radikalisch polymerisierbare Monomere aus der Gruppe der Ester von alpha,beta-ungesättigten Carbonsäuren, wie Acrylsäure oder Methacrylsäure, wobei Beispiele für die Alkoholkomponente Methyl-, Ethyl-, Propyl-Alkohol und deren Isomere und höhere Homologe sind. Weitere Beispiele sind Diester der Malein- oder Fumarsäure, wobei die Alkoholkomponente die gleiche wie vorstehend erwähnt ist. Weitere Beispiele sind vinylaromatische Verbindungen, wie Styrol, alpha-Methylstyrol und Vinyltoluol. Weitere Beispiele sind Vinylester kurzkettiger Carbonsäuren, wie Vinylacetat, Vinylpropionat und Vinylbutyrat. Die hydroxylgruppenhaltigen Poly(meth)acrylate der vorstehend definierten Komponente c) können beispielsweise modifizierte Poly(meth)acrylat-homo- und -copolymere sein, wie sie unter b) beschrieben werden, deren Hydroxylgruppen ganz oder partiell mit cyclischen Estern, wie z.B. von Hydroxycarbonsäure mit 4 bis 6 Kohlenstoffatomen, wie gamma-Butyrolacton oder epsilon-Caprolacton umgesetzt sein können. Die erhaltenen modifizierten Poly(meth)acrylate der Komponente c) weisen ein Zahlenmittel des Molekulargewichts Mn von 1000 bis 10000 auf.
Beispiele für die Polyesterpolyole und Polyetherpolyole der Komponente d) sind solche mit einem Zahlenmittel des Molekulargewichts Mn von 500 bis 2000 g/mol. Spezielle Beispiele sind Umsetzungsprodukte von Di- bzw. Tricarbonsäuren, wie Adipinsäure oder Trimellithsäure, mit Polyolen, wobei die Polyole im Überschuß vorliegen. Weitere Beispiele sind Umsetzungsprodukte von Di- oder Triolen, wie Propandiol, Butandiol oder Glycerin, mit Ethylenoxid oder Propylenoxid.
Erfindungsgemäß ist es auch möglich, die Bindemittelkomponenten B und C zumindest teilweise zu präkondensieren. Hierzu ist es beispielsweise möglich einen Teil oder das gesamte hydroxyfunktionelle Polyol der Komponente C gegebenenfalls mit einem oder mehreren organischen Lösemitteln vorzulegen und darin die zur Herstellung des epoxidfunktionellen Vorproduktes der Komponente B benötigten Monomeren oder einen Teil davon, umzusetzen. Beispielsweise können die hydroxyfunktionellen Polyole C, gegebenenfalls mit Lösemittel, vorgelegt und erwärmt werden, beispielsweise auf Temperaturen in der Größenordnung von 140°C. Die zur Herstellung des epoxidfunktionellen Vorproduktes der Komponente B benötigten Monomeren können, gegebenenfalls zusammen mit Initiatoren, zudosiert werden, beispielsweise während eines Zeitraums von bis zu 5 Stunden. Bei dieser Verfahrensweise wird als Polyol-Komponente C, wie sie nachstehend noch genauer definiert wird, bevorzugt ein Polyesterpolyol verwendet, insbesondere ein solches mit einem Zahlenmittel des Molekulargewichts Mn von 500 bis 2000, bevorzugt mit einer Säurezahl unter 3 mg KOH/g und bevorzugt mit einer OH-Zahl von 15 bis 200 mg KOH/g. Ein derartiges Präkondensat (Schoßpolymerisat) aus B und C kann gegenüber einer Mischung aus B und C Vorteile besitzen, wie beispielsweise eine bessere Verträglichkeit und eine homogenere Vermischung.
Die erfindungsgemäße Bindemittelzusammensetzung kann gegebenenfalls bis zu 20 Gew.-% eines oder mehrerer Melaminharze D₁) enthalten. Beispielsweise dafür verwendbare Melaminharze sind in Wasser unlösliche butanol- oder isobutanolveretherte Melamine wie z.B. die Handelsprodukte Setamin US 138 oder Maprenal MF 610; mischveretherte Melamine, die sowohl butanol-als auch methanolverethert sind, wie z.B. Cymel 254, sowie Hexamethyloxymethylmelamin (HMM-Melamine) wie z.B. Cymel 301 oder Cymel 303, wobei es gegebenenfalls günstig sein kann, insbesondere bei letzteren einen externen Säurekatalysator, wie z.B. p-Toluolsulfonsäure, zur Vernetzung zuzusetzen.
Weitere Beispiele für Melaminharzvernetzer sind übliche hydrophile und damit wasserlösliche bzw. -verträgliche Melaminharze, wie z.B. methylveretherte Melamine wie z.B. Cymel 325, Cymel 327, Cymel 350 und Cymel 370, Maprenal MF 927.
Die erfindungsgemäßen Überzugsmittel können als Vernetzer (Komponente D2) ein oder mehrere verkappte Polyisocyanate enthalten. Beispiele für den verkappten Polyisocyanaten zugrundeliegende einsetzbare Polyisocyanate sind cycloaliphatische, aliphatische oder aromatische Polyisocyanate wie Tetramethylen-diisocyanat, Hexamethylendiisocyanat, 2,2,4-Trimethylendiisocyanat, 1,12-Dodecandiisocyanat, Cyclohexan-1,3 und 1,4-diisocyanat, 1-Isocyanato-3,3,5-trimethyl-5-isocyanato-methylcyclohexan (=Isophorondiisocyanat IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, Triphenylmethan-4,4',4''-triisocyanat, Tetramethylxylylendiisocyanat oder Gemische dieser Verbindungen.
Neben diesen einfachen Isocyanaten sind auch solche geeignet, die Heteroatome in dem die Isocyanatgruppen verknüpfenden Rest enthalten. Beispiele hierfür sind Carbodiimidgruppen, Allphanatgruppen, Isocyanuratgruppen, Urethangruppen, acylierte Harnstoffgruppen und Biuretgruppen aufweisende Polyisocyanate.
Besonders gut für die Erfindung geeignet sind die bekannten Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62 - 300, insbesondere mit Trimethylolpropan erhalten werden können. Selbstverständlich können auch beliebige Gemische der genannten Polyisocyanate zur Herstellung der erfindungsgemäßen Produkte eingesetzt werden.
Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung. In diesen bekannten Prepolymeren entspricht das Verhältnis von Isocyanatgruppen zu gegenüber NCO reaktiven Wasserstoffatomen 1,05 bis 10 : 1, vorzugsweise 1,1 bis 3 : 1, wobei die Wasserstoffatome vorzugsweise aus Hydroxylgruppen stammen.
Die Art und Mengenverhältnisse der bei der Herstellung von NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800 - 4000 aufweisen.
Die Isocyanatgruppierungen der Polyisocyanate sind vollständig verkappt. Als Verkappungsmittel können übliche Verkappungsmittel verwendet werden, wie sie beispielsweise auf dem Lacksektor eingesetzt werden. Beispiele für verwendbare Verkappungsmittel sind Malonsäuredimethylester, Malonsäurediethylester, Acetessigsäureethylester, epsilon-Caprolactam, Acetanilid, Acetylaceton, Acetomoxim, Propandiol-1,2 und/oder Butanonoxim, wobei das zuletzt genannte Verkappungsmittel bevorzugt ist.
Die Verkappung der Polyisocyanate kann z.B. durch Erwärmen ein oder mehrerer Polyisocyanate mit dem Verkappungsmittel erfolgen. Beispielsweise können ein oder mehrere Polyisocyanate vorgelegt und unter Rühren erhitzt werden, z.B. auf etwa 80°C, und das Verkappungsmittel (beispielsweise während etwa 10 min.) zudosiert werden. Es wird solange gerührt, bis die NCO-Zahl kleiner als 0,1 % beträgt. Es ist auch möglich, ein oder mehrere Polyisocyanate mit einem Gemisch aus zwei oder mehreren Verkappungsmitteln zu verkappen.
Der Vorteil der Verwendung von zwei oder mehreren unterschiedlichen Polyisocyanaten und/oder zwei oder mehreren unterschiedlichen Verkappungsmitteln liegt darin, daß hiermit die Vernetzung über einen weiten Temperaturbereich erfolgen kann.
Die erfindungsgemäße Bindemittelzusammensetzung enthält 0 bis 10 Gew.-%, bezogen auf das Gesamtgewicht der Komponenten A) bis D₂), eines oder mehrerer Katalysatoren (Komponente E). Es handelt sich insbesondere um in organischen Lösemitteln lösliche oder in Wasser lösliche oder mit organischen Materialien mischbare Katalysatoren. Beispiele für geeignete in organischen Lösemitteln oder mit organischen Materialien mischbare Katalysatoren sind Phosphoniumsalze, wie beispielsweise Ethyltriphenylphosphoniumacetat, -phosphat, -chlorid, -bromid, -jodid, Butyltriphenylphosphoniumacetat, -phosphat, - chlorid, -bromid, -jodid, Benzyltriphenylphosphoniumacetat, -phosphat, -chlorid, -bromid, -jodid und die quaternären Ammoniumsalze, wie beispielsweise Alkylbenzyldimethylammoniumchlorid, Benzyltrimethylammoniumchlorid, Methyltrioctylammoniumchlorid, Tetraethylammoniumbromid, N-Dodecylpyridiniumchlorid und Tetraethylammoniumiodid. Die bevorzugten in organischen Lösemitteln löslichen oder mit organischen Materialien mischbaren Katalysatoren sind Ethyltriphenylphosphonium-Acetat; Ethyltriphenylphosphonium-phosphat, -chlorid, - bromid; Butyl-triphenylphosphoniumacetat, -phosphat, -chlorid, -bromid; Benzyltriphenylphosphoniumacetat, -phosphat, -chlorid, -bromid und Methyltrioctylammoniumchlorid. Ethyltriphenylphosphoniumphosphat kann beispielsweise aus Ethyltriphenylphosphoniumacetat durch Reaktion mit Phosphorsäure erhalten werden.
Der in organischen Lösemitteln und/oder Wasser lösliche oder mit organischen Materialien mischbare Katalysator kann in einer Menge von etwa 0 bis etwa 10,0 Gew.-%, beispielsweise von 0,1 bis 10 Gew.-%, vorzugsweise von 0,3 bis 2,0 Gew.-%, bezogen auf die Summe der Gewichte der Komponenten A) bis D₂), enthalten sein.
Ebenfalls ist es möglich, einen Aminkatalysator mit dem COOH-funktionalisierten (Meth)Acrylatharzgemisch zu verknüpfen. Dies geschieht zweckmäßigerweise durch Copolymerisation von tert. Amino(meth)acrylmonomeren bei der Synthese des COOH-funktionalisierten (Meth)Acrylatharzes.
Beispiele für solche Monomere sind Dimethylaminoethyl(meth)acrylat, Diethylaminopropyl(meth)acrylat und Dimethylaminopropyl(meth)acrylat. Der mengenmäßige Anteil dieser (Meth)Acrylate liegt zwischen 0,5 und 10 Gew.-%, bevorzugt 1 - 5 Gew.-%, bezogen auf den Gesamtfeststoffgehalt des COOH-funktionalisierten (Meth)Acrylatharzes.
Als Komponente F) enthalten die erfindungsgemäßen Bindemittelzusammensetzungen 0,1 bis 10 Gew.-% eines oder mehrerer thermisch aktivierbarer Initiatoren. Derartige Initiatoren bilden durch Zerfall freie Radikale.
Die Einsatzmenge beträgt bevorzugt 1 bis 6 Gew.-%, bezogen auf die Gesamtmenge der Komponenten A) und B). Als Initiatoren eingesetzt werden können beispielsweise übliche thermisch aktivierbare Initiatoren, wie dem Fachmann geläufige übliche Peroxide, wie z.B. Di-tertiär-butylperoxid, Tertiär-Butylperbenzoat, Tertiär-Butylperoctoat; Hydroperoxide wie z.B. Tertiär-Butylhydroperoxid, Cumolhydroperoxid; und Azoverbindungen wie z.B. Azo-bis-isobutyronitril.
Bevorzugt sind jedoch Initiatoren mit labilen Kohlenstoff-Kohlenstoff-Bindungen (sog. C-C-Initiatoren), wie beispielsweise Benzpinakolderivate, wie z.B. Benzpinakol, Benzpinakoldisilyether (monomer oder oligomer), Benzpinakoldimethylether, sowie Tetraphenylethan und Tetraphenylethandinitril.
Die erfindungsgemäßen Beschichtungsmassen können als Komponente F auch übliche Photoinitiatoren enthalten, wie sie für die radikalische und die ionische Polymerisation eingesetzt werden. Geeignet sind beispielsweise Initiatoren, die im Wellenlängenbereich von 190 bis 400 nm absorbieren.

Beispiele für verwendbare radikalische Initiatoren sind chlorhaltige Initiatoren, wie chlorhaltige aromatische Verbindungen, z.B. beschrieben in US-A-4 089 815; aromatische Ketone, wie in US-A-4 318 791 und EP-A-0 161 463 beschrieben; Hydroxyalkylphenone, wie in US-A-4 347 111 beschrieben; wasserlösliche Initiatoren, beispielsweise auf der Basis von Hydroxyalkylphenonen, wie in US-A-4 602 097 beschrieben, ungesättigte Initiatoren wie OH-funktionelle aromatische Verbindungen, die beispielsweise mit Acrylsäure verestert wurden, wie in US-A-3 929 490, EP-A-0 143 201 und EP-A-0 341 560 beschrieben; oder Kombinationen von derartigen Initiatoren, wie sie beispielsweise in US-A-4 017 652 beschrieben werden.

Spezielle Beispiele sind 2-Methyl-2-hydroxy-propiophenon, Benzophenon, Thioxanthonderivate, Acylphospinoxide und Michlers Keton.

Besonders bevorzugte verwendbare radikalische Initiatoren sind Phosphinoxide und Kombinationen von Phosphinoxiden mit weiteren üblichen Initiatoren, wie vorstehend beschrieben.

Beispiele verwendbarer kationischer Initiatoren sind Triarylsulfoniumsalze der allgemeinen Formel

(Aryl)₃ S⁺ X⁻

worin Aryl einen Arylrest, wie den Phenylrest, darstellt und X⁻ ein Anion ist, wie SbF₆⁻, PF₆⁻, AsF₆⁻ und BF₄⁻, wie in US-A-4 417 061, EP-A-0 327 194 und DE-A-2 904 626 beschrieben. Weitere Beispiele für kationische Initiatoren sind Oxoniumsalze, Iodoniumsalze und Diazoniumsalze, wie sie beispielsweise in folgenden Literaturstellen beschrieben werden: EP-A-0 464 131, US-A-4 421 904, EP-A-0 145 633, EP-A-0 310 881, EP-A-0 310 882 (Iodoniumsalze); DE-A-3 808 590 und DE-A-3 808 591 (Diazoniumsalze).

Außer diesen Initiatoren können auch Metallocen-Komplexe eingesetzt werden, wie z.B. beschrieben in EP-A-0 094 915.

Die erfindungsgemäßen Bindemittelzusammensetzungen können zur Herstellung von Überzugsmitteln eingesetzt werden. Sie können Lösemittel enthalten, wie sie beispielsweise für die Herstellung von Überzugsmitteln, beispielsweise Lacken geeignet sind.

Beispiele für derartige Lösemittel sind organische Lösemittel, wie aliphatische und aromatische Kohlenwasserstoffe, beispielsweise Toluol, Xylol, Gemische aliphatischer und/oder aromatischer Kohlenwasserstoffe, Ester, Ether und Alkohole. Es sind dies lackübliche Lösemittel. Zur Herstellung der Überzugsmittel aus den erfindungsgemäßen Bindemitteln können auch wäßrige Lösungen bereitet werden. Hierzu können gegebenenfalls geeignete Emulgatoren verwendet werden, wie sie auf dem Lacksektor üblich sind.

Die erfindungsgemäßen Bindemittelzusammensetzungen, sowie die erfindungsgemäßen Überzugsmittel können auch in wäßriger Form vorliegen, wobei sie frei von organischen Lösemitteln sind oder nur einen geringen Anteil an organischen Lösemitteln aufweisen. Zur Herstellung wäßriger Zusammensetzungen ist es beispielsweise möglich, die carboxylhaltige Komponente A) weitgehend von organischen Lösemitteln zu befreien, z.B. durch Destillation, anschließend einen Teil der Carboxylgruppen zu neutralisieren, z.B. mit Basen wie Triethylamin oder Dimethylethanolamin und dann in Wasser, das gegebenenfalls erwärmt ist, zu emulgieren. In dieses Emulgatorharz können dann gegebenenfalls die anderen Harze einemulgiert werden. Dies geschieht z.B. dadurch, daß das Emulgatorharz auf 60 bis 80°C erwärmt und unter die ebenfalls auf 60 bis 80°C erwärmten Hydroxy- und/oder epoxidfunktionellen Harze in 5 bis 120 Minuten unter Rühren zugefügt werden.

Ebenfalls möglich ist es auch, das weitgehend von Lösemitteln befreite COOH-funktionalisierte Harz der Komponente A) mit dem weitgehend vom Lösemittel befreiten Epoxidharz der Komponente B) zu mischen und in einem Wasser/Emulgator-Gemisch mittels einer Rotor-Stator-Anlage fremdzuemulgieren. Ebenso ist es möglich, die Komponenten getrennt zu emulgieren und die Emulsionen zu mischen.

Die erfindungsgemäßen Bindemittelzusammensetzungen sowie die erfindungsgemäßen Überzugsmittel können gegebenenfalls einen oder mehrere Reaktivverdünner enthalten. Diese können beispielsweise zur Viskositätseinstellung verwendet werden. Beispiele für Reaktivverdünner sind (meth)acryloylfunktionelle Monomere und Oligomere. Spezielle Beispiele sind (Meth)acrylate wie z.B. Lauryl(meth)acrylat, Alkylglykoldi(meth)acrylate wie Ethylenglykoldi(meth)acrylat, Diethylenglykoldi(meth)acrylat, Propylenglykoldi(meth)acrylat, Tripropylenglykoldi(meth)acrylat, 1,6-Hexamethylendi(meth)acrylat, Trimethylolpropantri(meth)acrylat, Trimethylolpropantriethoxytri(meth)acrylat, Pentaerythrittri(meth)acrylat, Pentaerythrittetra(meth)acrylat, sowie ethoxylierte und propoxylierte Varianten oder 2-Acetoxyethylmethacrylat.

Die erfindungsgemäßen Bindemittelzusammensetzungen können übliche Additive enthalten oder es können Additive zur Herstellung der Überzugsmittel zugesetzt werden. Als Additive dienen solche, die auf dem Lacksektor üblich sind, die Mengen liegen in üblichen, dem Fachmann geläufigen Bereichen.

Beispiele für Additive sind Pigmente, beispielsweise farbgebende Pigmente wie Titandioxid oder Ruß und Effektpigmente wie Metallschuppenpigmente und/oder Perlglanzpigmente. Die erfindungsgemäß bereitgestellten Bindemittelzusammensetzungen eignen sich auch für Überzugsmittel, die derartige Effektpigmente enthalten. Bevorzugt enthalten sie Effektpigmente zusammen mit farbgebenden Pigmenten oder farbgebende Pigmente zusammen mit Füllstoffen. Weitere Beispiele für Additive sind lackübliche Füllstoffe, wie z.B. Talkum und Silikate, Weichmacher, Lichtschutzmittel, Stabilisatoren und Verlaufsmittel, wie Silikonöle. Diese werden ebenfalls in üblichen, dem Fachmann geläufigen Mengen eingesetzt.

Die aus den erfindungsgemäßen Bindemitteln hergestellten Überzugsmittel sind für Überzüge geeignet, die auf einer Vielzahl von Substraten haften, wie beispielsweise Holz, Textilien, Kunststoff, Glas, Keramik und insbesondere Metall.

Das erfindungsgemäße Überzugsmittel wird nach bekannten Verfahren, wie z.B. Spritzen, Tauchen, Rollen oder Rakeln appliziert. Dabei wird auf das gegebenenfalls schon mit weiteren Lackschichten versehene Substrat der Decklacküberzug aufgetragen. Nach einer Abdunstphase wird das applizierte Überzugsmittel durch Erwärmen vernetzt. Die Einbrenntemperaturen liegen bei 20 bis 180°C, bevorzugt bei 60 bis 150°C. Wenn photochemisch aktivierbare Radikalinitiatoren enthalten sind, kann gleichzeitig mit dem Einbrennen oder anschließend an das Einbrennen eine Härtung durch Bestrahlung, beispielsweise mit UV-Licht, erfolgen. Die Schichtdicke des eingebrannten Films beträgt ca. 15 bis 60 µm. Dabei entsteht ein vernetzter harter, glänzender sowie säurebeständiger Lacküberzug.

Eine bevorzugte Ausführungsform ist die Applikation des erfindungsgemäßen Überzugsmittels als Klarlacküberzug auf einen Basislack, bevorzugt einen wäßrigen Basislack. Dabei kann naß-in-naß gearbeitet werden, oder der Basislack wird vorher durch Erwärmen getrocknet. Dabei entsteht eine besonders gute Haftung der beiden Schichten.

Mit den erfindungsgemäß pigmentfrei als Klarlacke formulierten Überzugsmittel können beispielsweise Basislacke überlackiert werden, die übliche Decklackpigmente enthalten können; bevorzugt enthalten sie Effektpigmente, wie z.B. Metallic-Pigmente. Als Bindemittelbasis des Basislacks werden bevorzugt Polyester, Polyurethan- oder -acrylatharze eingesetzt. Diese Bindemittel können gegebenenfalls über Vernetzer, z.B. Melamin- oder Isocyanatderivate, vernetzt werden.

Im Folgenden werden einige Beispiele für weitere Basislacke aufgeführt, die bevorzugt mit erfindungsgemäß bereiteten pigmentfreien Klar- oder pigmenthaltigen Decklacken beschichtet werden können.

Wasserbasislacke auf der Basis von 5 bis 95 Gew.-% eines wäßrigen epoxidfunktionalisierten Emulsionspolymerisats und 95 bis 5 Gew.-% einer anionischen Polyurethandispersion mit einer Säurezahl von 5 bis 10 mg KOH/g. Als Anreibeharze für in solchen Wasserbasislacken verwendete Pigmente und Additive eignen sich besonders Poly(meth)acrylatharze (beispielsweise in einer Menge bis zu 20 Gew.-%). Beispiele für solche Wasserbasislacke sind in der DE-A-36 28 124 beschrieben.

Basislacke auf der Basis von Polyestern mit einer Glasübergangstemperatur von > 30°C, Melaminharzen (z.B. partiell butylierten Melaminharzen), Polyharnstoffplastifizierern (beispielsweise auf der Basis eines Addukts aus Butylurethan und Formaldehyd) und einem Copolymer aus Polyethylen (85 Gew.-%) - Vinylacetat (15 Gew.-%) als Wachsdispersion. Solche Basislacke können übliche Additive, wie Celluloseacetobutyrat (beispielsweise mit unterschiedlichen Molekular-Gewichtsbereichen) enthalten. Beispiele für solche Basislacke sind in der EP-A-187 379 beschrieben.

Ein Beispiel für Basislacke auf Lösemittelbasis, die besonders für Reparaturzwecke geeignet sind, enthält physikalisch trocknende Bindemittel auf der Basis von thermoplastischem Polyester- und/oder Acrylharz im Gemisch mit Celluloseethern bzw. Celluloseestern und/oder Polyvinylacetaten. Ferner enthalten sind selbsthärtende Acrylharzbindemittel, die Farbpigmente enthalten und mit Isocyanat reagierende Wasserstoffatome aufweisen sowie zusätzlich Gemische von in Lösemitteln gelösten Celluloseethern und/oder Celluloseestern und/oder Cellulosehalbestern. Solche Lacke sind z.B. in der DE-OS 29 24 632 beschrieben.

Sämtliche der vorstehenden Basislackformulierungen können übliche Lackadditive enthalten, sowie übliche Füllstoffe und farbgebende Pigmente sowie auch Metallpigmente, wie Aluminium- bzw. Edelstahlbronzen und andere Effektpigmente.

Beispiele für Basislacke, die mit Klarlacken auf der Basis erfindungsgemäßer Überzugsmittel beschichtet werden können, sind auch Pulverlacke, wie sie beispielsweise in "Products Finishing", April 1976, Seiten 54 bis 56 beschrieben sind.

Es ist auch möglich, den Lack zu erwärmen und heiß zu applizieren, beispielsweise auf 60 bis 100°C. Hierdurch kann der Lack mit hohem Verarbeitungsfestkörper appliziert werden, da durch das Erwärmen die Viskosität reduziert wird.

Es ist auch möglich, den Lack mit überkritischem Kohlendioxid als Lacklösemittel zu versetzen und nach dem sogenannten Unicarb-Verfahren, wie es beispielsweise in der EP-A-0 321 607 und in der EP-A-0 388 927 beschrieben ist, zu applizieren.

Die erfindungsgemäßen Überzugsmittel können auch als Basislacke, sowie auch als Füller formuliert werden. Sie eignen sich dann besonders gut zur Herstellung von Mehrschichtlackierungen, z.B. auf dem Kraftfahrzeugsektor. Zur Formulierung als Basislacke oder Füller können übliche Additive, wie sie z.B. vorstehend für Basislack beschrieben wurden, zugesetzt werden.

Im Vergleich mit üblichen Basislacken ergeben erfindungsgemäße Basislacke Überzüge mit einer verbesserten Feucht-Warm-Beständigkeit, bedingt durch den besonders guten Vernetzungseffekt.

Die erfindungsgemäßen Basislacke können mit üblichen Klarlacken naß-in-naß, gegebenenfalls nach kurzer Antrocknung, überlackiert werden. Bevorzugt werden sie mit Klarlacken auf der Basis der erfindungsgemäßen Überzugsmittel überlackiert.

Die erfindungsgemäßen Überzugsmittel eignen sich besonders für Decklacke oder Klarlacke und Basislacke, die bevorzugt auf dem Kraftfahrzeugsektor, jedoch auch auf anderen Gebieten, eingesetzt werden. Die Verwendung des erfindungsgemäßen Überzugsmittels in der Mehrschichtlackierung ist besonders für die Automibilserien-Lackierung geeignet, sie kann jedoch auch für andere Zwecke verwendet werden, wie z.B. für Haushaltsgeräte oder in der Möbelindustrie, um besonders säurestabile Überzüge zu erhalten.

In den folgenden Beispielen beziehen sich Teile (T) und Prozent auf das Gewicht.

### Beispiel 1

### Herstellung eines carboxyfunktionellen Harzes (Komponente A)

In einem 4-Liter-Dreihalskolben, der mit Rührer, Thermometer, Tropftrichter und einem Rückflußkühler versehen ist, werden 1375 T Xylol vorgelegt und unter Rühren auf Rückflußtemperatur (ca. 140°C) erhitzt. Innerhalb von 5 h wird eine Mischung aus
- 264 T: Acrylsäure
- 292 T: Styrol
- 294 T: Butylacrylat
- 470 T: Butylmethacrylat und
- 55 T: Tert.-Butylperbenzoat
zugetropft. Nach einer 4-stündigen Nachpolymerisation werden innerhalb 30 Minuten 334 T epsilon-Caprolacton zugetropft. Die Umsetzung wird bei 140°C bis zum Erreichen des theoretischen Festkörpergehaltes durchgeführt.

Das carboxylfunktionelle Harz hat einen Festkörpergehalt von 57,5 % (1 h, 150°C), eine Säurezahl von 120 mg KOH/g und eine Viskosität von 5600 mPa.s (25°C).

Für die Anwendung in einem wäßrigen Klarlack (Beispiel 5) wird das carboxylfunktionelle Harz im Vakuum auf einen Festkörpergehalt von 91,6 % eingeengt.

### Beispiel 2

### Herstellung eines epoxyfunktionellen Harzes ohne Acryloylgruppen

In einem 4-Liter-Dreihalskolben, der mit Rührer, Thermometer, Tropftrichter und einem Rückflußkühler versehen ist, werden 1250 T Xylol vorgelegt und unter Rühren auf Rückflußtemperatur (ca. 140°C) erhitzt. Innerhalb von 5 h wird eine Mischung aus
- 750 T: Glycidylmethacrylat
- 155 T: Styrol
- 195 T: Butylacrylat
- 100 T: Butylmethacrylat und
- 50 T: Tert.-Butylperbenzoat
zugetropft und anschließend 6h nachpolymerisiert.

Das epoxyfunktionelle Harz hat einen Festkörpergehalt von 49,4 % (1h, 150°C).

### Herstellung eines epoxy-und acryloylfunktionellen Harzes (Komponente B)

a) In einem 6-Liter-Dreihalskolben, der mit Rührer, Thermometer, Tropftrichter und einem Rückflußkühler versehen ist, werden 2250 T Xylol vorgelegt und unter Rühren auf Rückflußtemperatur (ca. 140°C) erhitzt. Innerhalb von 5h wird eine Mischung aus
   - 1350 T: Glycidylmethacrylat
   - 279 T: Styrol
   - 351 T: Butylacrylat
   - 180 T: Butylmethacrylat und
   - 90 T: Tert.-Butylperbenzoat
   zugetropft und anschließend 6h nachpolymerisiert.
b) 2200 T dieses Harzes werden in einem 4-Liter-Kolben, der mit Rührer, Thermometer, Tropftrichter und Rückflußkühler versehen ist, unter Rühren auf 120°C erwärmt. Bei dieser Temperatur werden 477 T Butylacetat, 6.6 T Triphenylphosphit und 1,4 T Methylhydrochinon zugegeben. Nach 30-minütiger Homogenisierung wird innerhalb von 20 Minuten ein Gemisch aus 238 T Butylacetat und 110 T Acrylsäure zugegeben. Die Umsetzung wird solange bei 120°C durchgeführt, bis eine Säurezahl von 1 mg KOH/g erreicht ist. Anschließend wird unter Vakuum auf einen Festkörpergehalt von ca. 80 % eingeengt. Das Harz besitzt einen Festkörpergehalt von 83,5 % (1h, 150°C).

### Beispiel 3

### Herstellung von Überzugsmitteln:

In den folgenden Beispielen und im Vergleichsversuch werden
als Katalysator Komponente E) eine 20 %ige Lösung von Ethyltriphenylphosphoniumjodid in Ethanol,
als Melaminharz (Komponente D) ein handelsübliches methyliertes Melaminharz (Cymel 325^{R}),
und als Radikalinitiator (Komponente F) ein handelsüblicher oligomerer Benzpinakolsilyether verwendet.

### Beispiel 4

### Herstellung einer Klarlackzusammensetzung

Zur Herstellung einer Klarlackzusammensetzung wird folgende Rezeptur verwendet
- 41,6 T: carboxylfunktionelles Harz aus Beispiel 1)
- 25,4 T: epoxy- und acryloylfunktionelles Harz aus Beispiel 2b)
- 6,8 T: Katalysatorlösung
- 16,6 T: Butylacetat
- 1,7 T: Butyldiglykolacetat
- 6,3 T: Melaminharz
- 1,6 T: Radikalinitiator

Der Festkörpergehalt der Klarlackzusammensetzung liegt bei 52,0 %.

### Vergleichsversuch

Es wird eine Klarlackzusammensetzung wie in Beispiel 4 hergestellt, wobei jedoch mit einem epoxyfunktionellen Harz ohne Acryloylgruppen, also ohne Komponente B), gearbeitet wird. Es wurde folgende Rezeptur verwendet:
- 50,8 T: carboxyfunktionelles Harz aus Beispiel 1)
- 33,9 T: epoxyfunktionelles Harz aus Beispiel 2)
- 6,9 T: Katalysatorlösung
- 2,0 T: Butyldiglykolacetat
- 6,4 T: Melaminharz

Der Klarlack hat einen Festkörpergehalt von 52,4 %.

Mit einer Rakel werden die Klarlacke aus dem Beispiel 4 und dem Vergleichsversuch in einer Trockenfilmschichtdicke von 44 µm auf ein Eisenblech oder eine Glasplatte appliziert und nach einer 10-minütigen Ablüftphase bei Raumtemperatur 20 Minuten bei 140°C eingebrannt. Es resultieren harte, glänzende Filme mit guter Lösemittel- und Schwefelsäurebeständigkeit.

| | Klarlack aus Beispiel 4) | Klarlack aus dem Vergleichsversuch |
|---|---|---|
| Pendelhärte (König): | 151s | 134s |
| MEK-Rub: | >100 | >100 |
| Erichsen-Tiefung: | 5,6 mm | 4,7 mm |
| H₂SO₄(10%,65°C): | 17 min. | 16 min. |

MEK-Rub stellt einen Reibetest unter Verwendung eines mit Methyl-ethyl-keton getränkten Lappens dar.

Der mit dem erfindungsgemäßen Beispiel 4 erhaltene Klarlacküberzug weist eine höhere Härte auf als der mit dem Klarlack aus dem Vergleichsversuch erhaltene Überzug; dennoch ist seine Elastizität höher als die des mit dem Vergleichs-Klarlack erhaltenen Überzugs.

### Beispiel 5

### Herstellung eines wäßrigen Klarlacks

### a) Herstellung einer wäßrigen Emulsion:

In einem 1-Liter-Kolben werden 155,2 T einer 10%igen wäßrigen Lösung eines Emulgators auf der Basis eines Polyoxypropylenpolyoxyethylensorbitansäurediesters bei 60°C vorgelegt. Das Gemisch wird mit einem Rührer, der mit einer Geschwindigkeit von ca. 8500 Umdrehungen/min. rotiert, gerührt. Innerhalb von 3 Minuten werden bei 60°C ein Gemisch aus 257 T carboxylfunktionelles Harz von Beispiel 1, 157 T epoxy- und acryloylfunktionelles Harz von Beispiel 3b) und 39 T Melaminharz zugegeben.

Die so erhaltene milchig-weiße Emulsion hat einen Festkörpergehalt von 52,5 %.

### b) Herstellung einer wäßrigen Klarlackzusammensetzung

- 76,5 T: der Emulsion aus Beispiel 5a
- 5,4 T: Katalysatorlösung
- 18,0 T: vollentsalztes Wasser

Der wäßrige Klarlack hat einen Festkörpergehalt von 41,3 %. Es wird mit einer Spritzpistole (1,3 mm Düse) in einer Trockenfilmschichtdicke von ca. 40 µm auf blankes Eisenblech bzw. auf mit einer Mehrschichtlackierung mit Elektrotauchgrundierung, Füller und Wasserbasislack beschichtetem Eisenblech appliziert und nach einer 20minütigen Ablüftphase (10 min. Raumtemperatur, 10 min 80°C) 20 Minuten bei 140°C eingebrannt.

Die erhaltenen eingebrannten Filme haben eine gute Härte, hohen Glanz und eine gute Beständigkeit gegen Schwefelsäure und Superbenzin.

## Patentansprüche

1. Für Überzugsmittel geeignete Bindemittelzusammensetzung, enthaltend
A) 25 bis 75 Gew.-% eines oder mehrerer carboxylgruppenhaltiger Harze, die alpha,beta-ungesättigte Gruppen enthalten können, mit einem Zahlenmittel des Molekulargewichts (Mn) von 500 bis 10000 g/Mol und einer Säurezahl von 15 bis 200 mg KOH/g,
B) 25 bis 75 Gew.-% eines oder mehrerer Polyether, Polyester, Polyether/Polyester und/oder (Meth)acrylcopolymerer mit mindestens einer alpha,beta-ungesättigten Gruppe und mindestens einer Epoxidgruppe im Molekül, wobei die alpha,beta-ungesättigten Gruppen und Epoxidgruppen im Zahlenverhältnis 20 : 80 bis 80 : 20 vorliegen, mit einem Zahlenmittel des Molgewichts (Mn) von bis zu 10000 g/Mol,
C) 0 bis 60 Gew.-% eines oder mehrerer Polyole mit mindestens zwei Hydroxyfunktionen im Molekül,
D₁) 0 bis 20 Gew.-% eines oder mehrerer Melaminharze,
D₂) 0 - 40 Gew.-% eines oder mehrerer verkappter Polyisocyanate,
wobei sich die Summe der Gew.-% der Komponenten A), B), C), D₁) und D₂) auf 100 Gew.-% addiert, sowie
E) 0 bis 10 Gew.-% eines oder mehrerer Katalysatoren zur Katalyse der Reaktion von Carboxyl- und Epoxidgruppen, bezogen auf die Summe der Gewichte der Komponenten A) bis D₂), und
F) 0,1 bis 10 Gew.-% eines oder mehrerer thermisch und/oder photochemisch aktivierbarer Initiatoren, bezogen auf das Gesamtgewicht der Komponenten A) und B).

2. Bindemittelzusammensetzung nach Anspruch 1, worin die Harze der Komponente A) ein oder mehrere carboxylgruppenhaltige und gegebenenfalls alpha,beta-ungesättigte (Meth)acrylcopolymere und/oder ein oder mehrere carboxylgruppenhaltige, gegebenenfalls alpha,betaungesättigte Polyester sind.

3. Bindemittelzusammensetzung nach Anspruch 1 oder 2, worin die Harze der Komponente A) und B) zumindest teilweise präkondensiert sind.

4. Bindemittelzusammensetzung nach einem der vorhergehenden Ansprüche, dadurch gekennzeichnet, daß die Komponente B ganz oder teilweise in Gegenwart zumindest eines Teils der Komponente C hergestellt wurde.

5. Bindemittelzusammensetzung nach Anspruch 4, dadurch gekennzeichnet, daß es sich bei der Komponente C um einen hydroxyfunktionellen Polyester handelt.

6. Überzugsmittel, enthaltend das Bindemittel nach einem der Ansprüche 1 bis 5.

7. Überzugsmittel nach Anspruch 6 in der Form eines lösemittelhaltigen Lackes.

8. Überzugsmittel nach Anspruch 7 mit einem Lösemittelgehalt von 5 bis 60 Gew.-%.

9. Überzugsmittel nach Anspruch 6, das Wasser und gegebenenfalls ein oder mehrere organische Lösemittel enthält.

10. Überzugsmittel nach Anspruch 6 in der Form eines Pulverlackes.

11. Überzugsmittel nach einem der Ansprüche 6 bis 10 in der Form eines pigmentfreien und füllstofffreien, gegebenenfalls lackübliche Additive enthaltenden Klarlackes.

12. Überzugsmittel nach einem der Ansprüche 6 bis 10 in der Form eines Pigmente, Füllstoffe und/oder lackübliche Additive enthaltenden Deck- oder Basislackes.

13. Verfahren zur Herstellung eines Überzugsmittels nach einem der Ansprüche 6 bis 9, 11 und 12, dadurch gekennzeichnet, daß man ein Bindemittel nach einem der Ansprüche 1 bis 5 in einem oder mehreren organischen Lösemitteln und/oder Wasser, gegebenenfalls nach Teilneutralisation der vorhandenen Carboxylgruppen, löst oder dispergiert und vor oder nach dem Lösen oder Dispergieren mit lacküblichen Additiven und/oder Pigmenten und/oder Füllstoffen vermischt.

14. Verwendung der Überzugsmittel nach einem der Ansprüche 6 bis 10 und 12 in pigmenthaltiger Form zur Herstellung von ein- oder mehrschichtigen Lackierungen.

15. Verwendung der Überzugsmittel nach Anspruch 11 in pigmentfreier Form zur Herstellung von Klarlackschichten.

16. Verwendung der Überzugsmittel nach einem der Ansprüche 6 bis 10 und 12 in pigmentierter Form zur Herstellung von Basislackschichten.

17. Verwendung der Überzugsmittel nach einem der Ansprüche 6 bis 12 zur Herstellung von Füllerschichten und/oder Basislackschichten und/oder Klarlackschichten in Mehrschichtlackierungen.

18. Verwendung der Überzugsmittel nach einem der Ansprüche 6 bis 12 zur Herstellung von Mehrschichtlackierungen auf dem Kraftfahrzeugsektor.

## Claims

1. A binder vehicle composition suitable for coating media, containing
A) 25 to 75 % by weight of one or more resins containing carboxyl groups, which may contain alpha,beta-unsaturated groups, and which have a number average molecular weight (Mn) of 500 to 10,000 g/mole and an acid number of 15 to 200 mg KOH/g,
B) 25 to 75 % by weight of one or more polyethers, polyesters, polyether/polyesters and/or (meth)acrylic copolymers which contain at least one alpha,beta-unsaturated group and at least one epoxide group in their molecule, wherein the alpha,beta-unsaturated groups and epoxide groups are present in a numerical ratio of 20 : 80 to 80 : 20, with a number average molecular weight (Mn) of up to 10,000 g/mole,
C) 0 to 60 % by weight of one or more polyols having at least two hydroxy functions in their molecule,
D₁) 0 to 20 % by weight of one or more melamine resins,
D₂) 0 - 40 % by weight of one or more capped polyisocyanates,
wherein the sum of the percentages by weight of components A), B), C), D₁) and D₂) adds up to 100 % by weight, and containing
E) 0 to 10 % by weight, with respect to the sum of the weights of components A) to D₂), of one or more catalysts for catalysing the reaction of carboxyl and epoxide groups, and
F) 0.1 to 10 % by weight, with respect to the total weight of components A) and B), of one or more thermally and/or photochemically activatable initiators.

2. A binder vehicle composition according to claim 1, wherein the resins of component A) are (meth)acrylic copolymers which contain one or more carboxyl groups and which are optionally alpha,beta-unsaturated, and/or polyesters which contain one or more carboxyl groups and which are optionally alpha,beta-unsaturated.

3. A binder vehicle composition according to claim 1 or 2, wherein the resins of components A) and B) are at least partially pre-condensed.

4. A binder vehicle composition according to any one of the preceding claims, characterised in that component B was completely or partially produced in the presence of at least part of component C.

5. A binder vehicle composition according to claim 4, characterised in that component C is a hydroxy-functional polyester.

6. A coating medium containing the binder vehicle according to any one of claims 1 to 5.

7. A coating medium according to claim 6 in the form of a solvent-containing lacquer.

8. A coating medium according to claim 7 having a solvent content of 5 to 60 % by weight.

9. A coating medium according to claim 6 which contains water and optionally one or more organic solvents.

10. A coating medium according to claim 6 in the form of a coating powder.

11. A coating medium according to any one of claims 6 to 10 in the form of a clear lacquer which is free from pigment and free from extender which optionally contains customary lacquer additives.

12. A coating medium according to any one of claims 6 to 10 in the form of a covering lacquer or base lacquer which contains pigments, extenders and/or customary lacquer additives.

13. A method of producing a coating medium according to any one of claims 6 to 9, 11 and 12, characterised in that a binder vehicle according to any one of claims 1 to 5, is dissolved or dispersed in one or more organic solvents and/or water, optionally after partial neutralisation of the carboxyl groups which are present, and is mixed, before or after dissolution or dispersion, with customary lacquer additives and/or pigments and/or extenders.

14. The use of the coating media according to any one of claims 6 to 10 and 12 in pigment-containing form for the production of single- or multi-layer coatings.

15. The use of the coating media according to claim 11 in pigment-free form for the production of clear lacquer coats.

16. The use of the coating media according to any one of claims 6 to 10 and 12 in pigmented form for the production of base lacquer coats.

17. The use of the coating media according to any one of claims 6 to 12 for the production of primer surfacer coats and/or base lacquer coats and/or clear lacquer coats in multi-layer coatings.

18. The use of the coating media according to any one of claims 6 to 12 for the production of multi-layer coatings in the motor vehicle industry.

## Revendications

1. Composition de liant convenant pour des produits de revêtement, et qui contient :
A) 25 à 75 % en poids d'une ou plusieurs résines contenant des groupes carboxy, pouvant contenir des groupes α,β-insaturés, ayant un poids moléculaire moyen, moyenne en nombre, Mn, de 500 à 10.000 g/mol et un indice d'acide de 15 à 200 mg de KOH/g,
B) 25 à 75 % en poids d'un ou plusieurs polyéthers, polyesters, polyéthers/polyesters et/ou copolymères (méth)acryliques à au moins un groupe α,β-insaturé et au moins un groupe époxyde dans la molécule, les groupes α,β-insaturé et les groupes époxy étant présents dans un rapport en nombre de 20 : 80 à 80 : 20, à un poids moléculaire moyen, moyenne en nombre, Mn allant jusqu'à 10.000 g/mol,
C) 0 à 60 % en poids d'un ou plusieurs polyols à au moins deux fonctions hydroxy dans la molécule,
D₁) 0 à 20 % en poids d'une ou plusieurs résines de mélamine.
D₂) 0 à 40 % en poids d'un ou plusieurs polyisocyanates bloqués, la somme des pourcentages des composants A), B), C), D₁) et D₂) représentant 100 % en poids, et
E) 0 à 10 % en poids d'un ou plusieurs catalyseurs de la réaction entre les groupes carboxyle et les groupes époxyde, par rapport à la somme des poids des composants A) à D₂), et
F) 0,1 à 10 % en poids d'un ou plusieurs inducteurs activables par la chaleur et/ou par voie photochimique, par rapport au poids total des composants A) et B).

2. Composition de liant selon la revendication 1, dans laquelle les résines du composant A) consistent en un ou plusieurs copolymères (méth)acryliques contenant des groupes carboxyle et le cas échéant α,β-insaturés et/ou un ou plusieurs polyesters contenant des groupes carboxyle et éventuellement α,β-insaturés.

3. Composition de liant selon la revendication 1 ou 2, dans laquelle les résines des composants A) et B) ont subi une précondensation au moins partielle.

4. Composition de liant selon l'une des revendications qui précèdent, caractérisée en ce que le composant B) a été préparé en totalité ou en partie en présence d'au moins une partie du composant C).

5. Composition de liant selon la revendication 4, caractérisée en ce que le composant C) est un polyester à fonctions hydroxy.

6. Produit de revêtement contenant le liant selon l'une des revendications 1 à 5.

7. Produit de revêtement selon la revendication 6, à l'état de peinture ou vernis contenant des solvants.

8. Produit de revêtement selon la revendication 7, à une teneur en solvant de 5 à 60 % en poids.

9. Produit de revêtement selon la revendication 6, contenant de l'eau et le cas échéant,un ou plusieurs solvants organiques.

10. Produit de revêtement selon la revendication 6, sous la forme de vernis en poudre.

11. Produit de revêtement selon l'une des revendications 6 à 10, sous la forme de vernis clair exempt de pigment et de matière de charge mais contenant le cas échéant des additifs usuels pour peintures et vernis.

12. Produit de revêtement selon l'une des revendications 6 à 10, sous la forme de peinture de couverture ou de base contenant des pigments, des matières de charge et/ou des additifs usuels pour peintures et vernis.

13. Procédé de préparation d'un produit de revêtement selon l'une des revendications 6 à 9, 11 et 12, caractérisé en ce que l'on dissout ou disperse un liant selon l'une des revendications 1 à 5 dans un ou plusieurs solvants organiques et/ou l'eau, le cas échéant aprés neutralisation partielle des groupes carboxyle présents ; et avant ou après la dissolution ou dispersion, on mélange avec des additifs et/ou des pigments et/ou des matières de charge usuels pour peintures et vernis.

14. Utilisation du produit de revêtement selon l'une des revendications 6 à 10 et 12, à l'état pigmenté pour l'application de revêtements de peinture à une ou plusieurs couches.

15. Utilisation du produit de revêtement selon la revendication 11 sans pigment pour l'application de couches de vernis clair.

16. Utilisation du produit de revêtement selon l'une des revendications 6 à 10 et 12, à l'état pigmenté pour l'application de couches de peinture de base.

17. Utilisation du produit de revêtement selon l'une des revendications 6 à 12 pour l'application de couches de mastic et/ou de couches de peinture de base et/ou de couches de vernis clair dans des applications de revêtement à plusieurs couches.

18. Utilisation du produit de revêtement selon l'une des revendications 10 à 12 pour l'application de revêtements à plusieurs couches dans l'industrie des véhicules.
